# EUROPEAN PATENT APPLICATION

(11) **EP 2 608 051 A2**
(43) Date of publication of application: **26.06.2013**
(21) Application number: 12198172.4
(22) Date of filing: 19.12.2012
(51) Int. Cl.: G06F 17/24, G06F 17/27, G06F 17/28

(54) **Electronic device and display method for word information thereof**

(30) Priority: 20.12.2011 TW 100147435
(71) Applicant: Young Optics Inc., Hsinchu 30076 (TW)
(72) Inventor: Chiang, Huang-Cheng, 300 Hsinchu (TW); Lin, Yung-Chu, 300 Hsinchu (TW); Hu, Jui-En, 300 Hsinchu (TW)
(74) Representative: Ter Meer Steinmeister & Partner

(57) **Abstract**

An electronic device and a display method for word information thereof are provided. The display method for word information includes following steps: identifying a user to acquire a user characteristic; acquiring a user word table according to the user characteristic; detecting a selected word pointed by a pointing device; and when the selected word is recorded in the user word table, displaying the word information corresponding to the selected word according to the user word table, wherein the word information includes at least one of word translation and a word note corresponding to the selected word.

## Description

### CROSS-REFERENCE TO RELATED APPLICATION

This application claims the priority benefit of Taiwan application serial no. 100147435, filed on December 20, 2011. The entirety of the above-mentioned patent application is hereby incorporated by reference herein and made a part of this specification.

### BACKGROUND OF THE INVENTION

### Field of the Invention

The invention generally relates to an electronic device and a display method thereof, and more particularly, to an electronic device and a display method for word information thereof.

### Description of Related Art

Along with the progresses of science and technology, modern people tend to use the translation interfaces provided by translation software or translation websites to substitute the traditional dictionaries for speeding up the inquiring of words when learning a foreign language, in which most of the translation software provides instant translation function. When the instant translation function is started, the translation software would display a translation corresponding to each word pointed by a pointing device. However, when the pointing device slides on a sentence, the translation window may jump and cause reading inconvenience.

Taiwan Issued Patent No. I317489 discloses an apparatus and a method for image recognition and translation, which takes image photographs through an image-capturing unit and recognizes the text in the image through a character recognition module, followed by translating the recognized text through a translation module into a specified language and finally displaying the translated text through a display unit.

Taiwan Patent Application Publication No. 201104460 discloses a translation system with mark capturing and method thereof, which generates a marked character/word by selecting continuous strings in the file content and records the generated marked character/word at a new words message, so that each of the recorded marked character/word is respectively compared with a translation word according to the new words message, and when the comparison result is matched, the corresponding translation explanation is loaded for displaying.

### SUMMARY OF THE INVENTION

Accordingly, the invention is directed to an electronic device and a display method for word information thereof in order to avoid the jumping of floating window and thereby avoid reading inconvenience caused by the jumping of translation window.

Other objectives and advantages of the invention should be further indicated by the disclosures of the invention, and omitted herein for simplicity.

To achieve one of, a part of or all of the above-mentioned advantages, or to achieve other advantages, an embodiment of the invention provides an electronic device, and the electronic device includes a detecting unit, an identifying unit, a displaying unit, and a word information processing unit. The detecting unit is configured for detecting a selected word pointed by a pointing device. The identifying unit is configured for identifying and acquiring characteristic information. The word information processing unit is coupled to the detecting unit, the identifying unit, and the displaying unit, and is configured for acquiring a word table according to the characteristic information. When the selected word is recorded in the word table, the word information processing unit controls the displaying unit to display word information corresponding to the selected word according to the word table. The word information includes at least one of word translation and a word note corresponding to the selected word.

To achieve one of, a part of or all of the above-mentioned advantages, or to achieve other advantages, an embodiment of the invention provides a display method for word information of an electronic device, and the method includes following steps: identifying a user to acquire a user characteristic; acquiring a user word table according to the user characteristic; detecting a selected word pointed by a pointing device; and when the selected word is recorded in the user word table, displaying the word information corresponding to the selected word according to the user word table. The word information includes at least one of word translation and a word note corresponding to the selected word.

Based on the description above, in the above-mentioned embodiment of the invention, the electronic device and the display method for word information thereof acquire a corresponding user word table according to the user characteristic obtained by identifying a user. When the selected word pointed by the pointing device is recorded in the user word table, word translation and/or a word note corresponding to the selected word are displayed according to the user word table. Accordingly, the jumping of floating window may be avoided and thereby reading inconvenience caused by the jumping of the translation window may be avoided.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

Fig. 1 is a system schematic diagram of an electronic device according to an embodiment of the invention.

Figs. 2-5 are several displayed frame diagrams as per different selected words and different settings of user word tables according to an embodiment of the invention.

Fig. 6 is a flowchart of a display method for word information of an electronic device according to an embodiment of the invention.

### DESCRIPTION OF THE EMBODIMENTS

It is to be understood that other embodiment may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

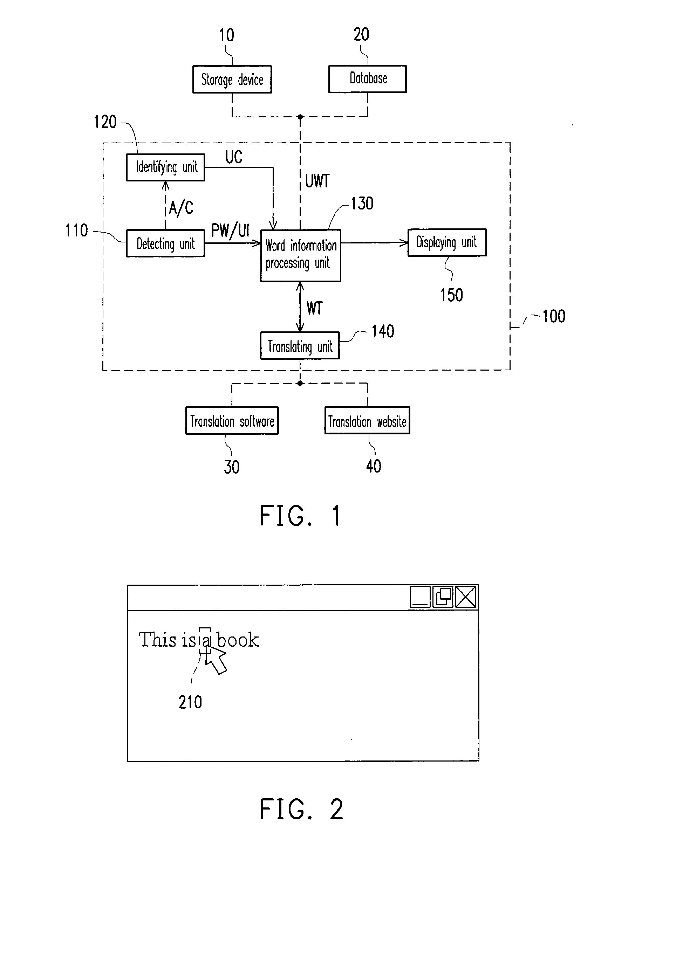

Referring to Fig. 1, an electronic device 100 in the embodiment includes a detecting unit 110, an identifying unit 120, a word information processing unit 130, a translating unit 140, and a displaying unit 150. The detecting unit 110 is configured for detecting a selected word PW pointed by a pointing device (such as a mouse or a trackball). The identifying unit 120 is configured for identifying a user to acquire a user characteristic UC. The identifying process may be implemented by account password confirmation, card confirmation or biological feature confirmation (such as fingerprint or retina), and the account password confirmation may be finished by acquiring an account password A/C input by the user through the detecting unit 110.

The word information processing unit 130 is coupled to the detecting unit 110, the identifying unit 120, the translating unit 140, and the displaying unit 150. The word information processing unit 130 acquires a user word table UWT according to the user characteristic UC, and the user word table UWT may be saved in a storage device 10 or a database 20. The storage device 10 is, for example, optical disk, hard drive, flash drive, memory card or solid state hard drive and the storage device 10 may be an external device of the electronic device 100 or built-in the electronic device 100. If the storage device 10 is an external device, the user may carry the user word table UWT of his/her own through the storage device 10. If the user word table UWT is saved in the database 20, the user may access the user word table UWT of his/her own at any place from the Internet.

When a selected word PW is recorded in the user word table UWT, the word information processing unit 130 controls the displaying unit 150 to display the word information corresponding to the selected word PW according to the user word table UWT. In more details, assuming each selected word PW in the user word table UWT is corresponding to a translation field and a note field, and the translation field is for indicating whether the corresponding selected word needs to be translated or not and the note field is for recording the word note corresponding to the selected word PW. When the selected word PW is recorded in the user word table UWT, one of the translation field and the note field is non-empty, i.e., the word information corresponding to the selected word PW includes at least one of the word translation and the word note.

When the translation field corresponding to the selected word PW in the user word table UWT is marked, the word information processing unit 130 acquires the word translation WT corresponding to the selected word PW through the translating unit 140, while the word information displayed by the displaying unit 150 includes the word translation WT. Herein, the translating unit 140 may acquire the word translation WT through a translation interface provided by the translation software 30 and/or the translation website 40. The translation software 30 herein may be installed in the electronic device 100 or a server (not shown) and it may be designed by any people skilled in the art. When the word note is recorded at a note field corresponding to the selected word PW in the word table UWT, while the word information displayed by the displaying unit 150 includes the word note.

On the other hand, when the selected word PW is not recorded in the user word table UWT, the word information processing unit 130 does not respond to the selected word PW and the displaying unit 150 would not display any information as well. According to the description mentioned above, when the selected word PW is recorded in the user word table UWT, the word information processing unit 130 controls the displaying unit 150 to display the word information corresponding to the selected word PW according to the user word table UWT; on the contrary, the displaying unit 150 displays no information. In this way, the electronic device 100 may avoid the jumping of floating window when the pointing device slides on a sentence and thereby avoid reading inconvenience caused by the jumping of the translation window.

Figs. 2-5 are several displayed frame diagrams as per different selected words and different settings of user word tables according to an embodiment of the invention. Referring to Figs. 1 and 2, assuming the selected word 210 pointed by the pointing device (as shown by the arrow in Fig. 2) is "a" and "a" is not recorded in the user word table UWT, hence any information corresponding to "a" is not displayed.

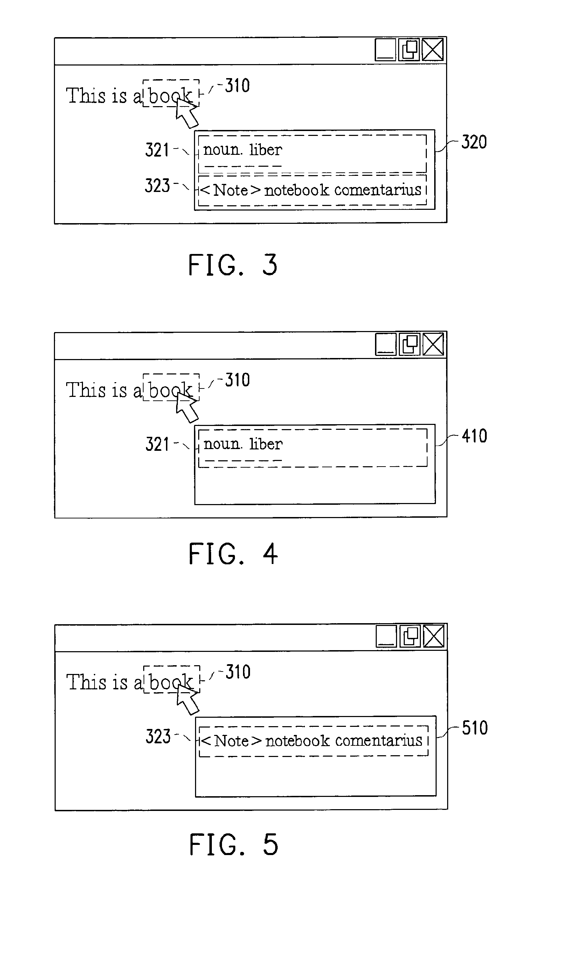

Referring to Figs. 1 and 3, in the embodiment, assuming the selected word 310 pointed by the pointing device (as shown by the arrow in Fig. 3) is "book" and "book" is recorded in the user word table UWT, while both the translation field and the note field corresponding to "book" are non-empty. At the time, a float window 320 corresponding to "book" pops up, and word translation 321 and a word note 323 corresponding to "book" are displayed in the float window 320.

Referring to Figs. 1, 3, and 4, in the embodiment, assuming the selected word 310 pointed by the pointing device (as shown by the arrow in Fig. 4) is "book" and "book" is recorded in the user word table UWT, while the translation field corresponding to "book" is non-empty by setting (i.e., marked already) and the corresponding note field is empty by setting. At the time, a float window 410 corresponding to "book" pops up, and the word translation 321 corresponding to "book" is displayed in the float window 410, while the word note 323 is not displayed.

Referring to Figs. 1, 3 and 5, in the embodiment, assuming the selected word 310 pointed by the pointing device (as shown by the arrow in Fig. 5) is "book" and "book" is recorded in the user word table UWT, while the translation field corresponding to "book" is empty by setting (i.e., not marked yet) and the corresponding note field is non-empty by setting (i.e., the word note is recorded). At the time, a float window 510 corresponding to "book" pops up, and the word note 323 corresponding to "book" is displayed in the float window 510, while the word translation 321 is not displayed.

Referring to Fig. 1 again, when the selected word PW is not recorded in the user word table UWT, the selected word PW may be recorded in the user word table UWT through a user input UI, wherein the user input UI may be obtained through the detecting unit 110, but the invention is not limited to. In more details, when the user input UI is to mark the translation field corresponding to the selected word PW, the word information processing unit 130 would record the selected word PW in the user word table UWT and mark the translation field corresponding to the selected word PW; when the user input is to record the word note at the note field corresponding to the selected word PW, the word information processing unit 130 would record the selected word PW in the user word table UWT and record the word note at the note field corresponding to the selected word PW; when the user input UI is to mark the translation field corresponding to the selected word PW and record the word note at the note field corresponding to the selected word PW, the word information processing unit 130 would record the selected word PW in the user word table UWT, mark the translation field corresponding to the selected word PW, and record the word note at the note field corresponding to the selected word PW.

When the selected word PW is recorded in the user word table UWT, the word information corresponding to the selected word PW may be changed through the user input UI. That is, the word information processing unit 130 changes the mark of the translation field corresponding to the selected word PW and/or changes the word note recorded at the note field corresponding to the selected word PW according to the user input UI.

In more details, when the translation field corresponding to the selected word PW is not marked and the user input UI is to mark the translation field, the word information processing unit 130 would mark the translation field corresponding to the selected word PW and then the word information corresponding to the selected word PW would include the word translation. When the translation field corresponding to the selected word PW is marked and the user input UI is to delete the mark of the translation field, the word information processing unit 130 would delete the mark of the translation field corresponding to the selected word PW and then the word information corresponding to the selected word PW would not include the word translation.

When the note field corresponding to the selected word PW is empty and the user input UI is to record the word note at the note field, the word information processing unit 130 would record the word note at the note field corresponding to the selected word PW and then the word information corresponding to the selected word PW would include the word note. When the word note is recorded at the note field corresponding to the selected word PW and the user input UI is to delete the word note, the word information processing unit 130 would delete the word note at the note field corresponding to the selected word PW and then the word information corresponding to the selected word PW would not include the word note. When the word note is recorded at the note field corresponding to the selected word PW and the user input UI is to record the word note at the note field, the word information processing unit 130 would replace the old word note with the new word note or add the new word into the note field corresponding to the selected word PW, which may be decided by the people skilled in the art.

In addition, after the word information processing unit 130 changes the mark of the translation field corresponding to the selected word PW and/or changes the word note recorded at the note field corresponding to the selected word PW according to the user input UI, the word information processing unit 130 would check the translation field and the note field corresponding to the selected word PW. When both the translation field and the note field corresponding to the selected word PW are empty (i.e., the word information corresponding to the selected word PW is empty), the word information processing unit 130 would delete the selected word PW from the user word table UWT.

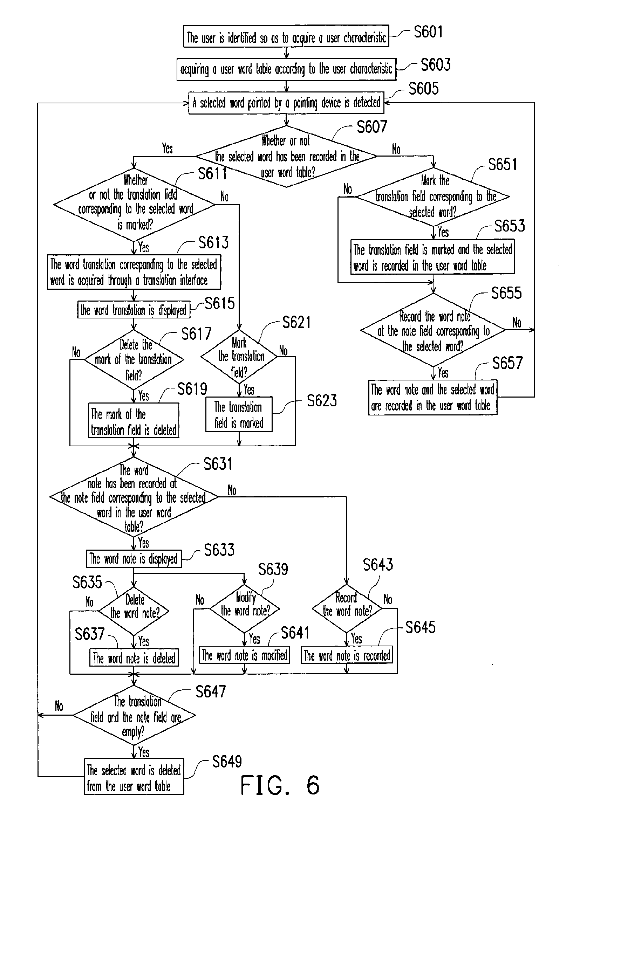

Based on the description mentioned above, a display method for word information of an electronic device and its application in an electronic device 100 are summarized in the following. Referring to Fig. 6, in the embodiment, the user is identified so as to acquire a user characteristic (step S601) and a user word table is acquired according to the user characteristic (step S603). Then, a selected word pointed by a pointing device is detected (step S605) and it is judged whether the selected word is recorded in the user word table or not (step S607).

When a selected word is recorded in the user word table, i.e., the judgement result in step S607 is "yes", it is further judged whether the translation field corresponding to the selected word is marked or not (step S611). When the translation field corresponding to the selected word in the user word table is marked, i.e., the judgement result in step S611 is "yes", the word translation corresponding to the selected word is acquired through the translation interface (step S613) and the word translation is displayed (step S615). After that, it is further judged whether the user input is to delete the mark of the translation field or not (step S617). When the user input is to delete the mark of the translation field, i.e., the judgement result in step S617 is "yes", the mark of the translation field is deleted (step S619), followed by executing step S631; when the user input is not to delete the mark of the translation field, i.e., the judgement result in step S617 is "no", the workflow directly jumps to step S631.

Back to step S611, when the translation field corresponding to the selected word in the user word table is not labelled, i.e., the judgement result in step S611 is "no", it is further judged whether the user input is to mark the translation field or not (step S621). When the user input is to mark the translation field, i.e., the judgement result in step S621 is "yes", the translation field is marked (step S623), followed by executing step S631; when the user input is not to mark the translation field, i.e., the judgement result in step S621 is "no", the workflow directly jumps to step S631.

In step S631, it is further judged whether the word note is recorded at the note field corresponding to the selected word in the user word table or not. When the word note is recorded at the note field corresponding to the selected word in the user word table, i.e., the judgement result in step S631 is "yes", the word note is displayed (step S633). Then, it is further judged whether the user input is to delete the word note or not (step S635). When the user input is to delete the word note, i.e., the judgement result in step S635 is "yes", the word note is deleted (step S637), followed by executing step S647; when the user input is not to delete the word note, i.e., the judgement result in step S635 is "no", the workflow directly jumps to step S647. Moreover, it is further judged whether the user input is to modify the word note or not (step S639). When the user input is to modify the word note, i.e., the judgement result in step S639 is "yes", the word note is modified according to the user input (step S641), followed by executing step S647; when the user input is not to modify the word note, i.e., the judgement result in step S639 is "no", the workflow directly jumps to step S647.

Back to step S631, when the word note is not recorded at the note field corresponding to the selected word in the user word table, i.e., the judgement result in step S631 is "no", it is further judged whether the user input is to record the word note or not (step S643). When the user input is to record the word note, i.e., the judgement result in step S643 is "yes", the word note is recorded at the note field corresponding to the selected word (step S645), followed by executing step S647; when the user input is not to record the word note, i.e., the judgement result in step S643 is "no", the workflow directly jumps to step S647.

After both the mark of the translation field and the word note of the note field are deleted, there is no need to record the selected word in the user word table. Therefore, in step S647, it is further judged whether the translation field and the note field are empty or not. When both the translation field and the note field are empty, i.e., the judgement result in step S647 is "yes", the selected word is deleted from the user word table (step S649), followed by executing step S605 back so as to detect the selected word pointed by the pointing device again; when one of the translation field and the note field is non-empty, i.e., the judgement result in step S647 is "no", the workflow goes back to step S605, where the selected word pointed by the pointing device is detected again.

Back to step S607, when the selected word is not recorded in the user word table, i.e., the judgement result in step S607 is "no", it is further judged whether the user input is to mark the translation field corresponding to the selected word or not (step S651). When the user input is to mark the translation field corresponding to the selected word, i.e., the judgement result in step S651 is "yes", the translation field corresponding to the selected word is marked and the selected word is recorded in the user word table (step S653), followed by executing step S655; when the user input is not to mark the translation field corresponding to the selected word, i.e., the judgement result in step S651 is "no", the workflow directly jumps to step S655.

In step S655, it is further judged whether the user input is to record the word note at the note field corresponding to the selected word or not. When the user input is to record the word note at the note field corresponding to the selected word, i.e., the judgement result in step S655 is "yes", the word note would be recorded at the note field corresponding to the selected word and the selected word would be recorded in the user word table (step S657), followed by executing step S605 back so as to detect the selected word pointed by the pointing device again; when the user input is not to record the word note at the note field corresponding to the selected word, i.e., the judgement result in step S655 is "no", the workflow goes back to step S605, where the selected word pointed by the pointing device is detected again. The sequences of the above-mentioned steps are for explanation only, which the invention is not limited to. The details of the above-mentioned steps may refer to the description of the electronic device 100, which is omitted to describe.

In summary, in the above-mentioned embodiment of the invention, the electronic device and the display method for word information thereof acquire a corresponding user word table according to the user characteristic obtained by identifying a user. When the selected word pointed by the pointing device is recorded in the user word table, word translation and/or a word note corresponding to the selected word are displayed according to the user word table; when the selected word pointed by the pointing device is not recorded in the user word table, no information is displayed. Accordingly, the jumping of floating window may be avoided and thereby reading inconvenience caused by the jumping of the translation window may be avoided.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. An electronic device (100), comprising:
a detecting unit (110), configured for detecting a selected word (PW) pointed by a pointing device;
an identifying unit (120), configured for identifying and acquiring a characteristic information;
a displaying unit (150); and
a word information processing unit (130), coupled to the detecting unit (110), the identifying unit (120), and the displaying unit (150), configured for acquiring a word table (UWT) according to the characteristic information, wherein when the selected word (PW) is recorded in the word table (UWT), the word information processing unit (130) controls the displaying unit (150) to display word information corresponding to the selected word according to the word table (UWT), and wherein the word information comprises at least one of word translation and a word note corresponding to the selected word (PW).

2. The electronic device (100) as claimed in claim 1, wherein when a translation field in the word table (UWT) corresponding to the selected word (PW) is marked, the word information processing unit (120) acquires the word translation (WT) and the word information comprises the word translation (WT).

3. The electronic device (100) as claimed in claim 2, further comprising a translating unit (140) coupled to the word information processing unit (130) for acquiring the word translation (WT) through a translation interface, wherein the translation interface is provided by at least one of translation software and translation websites.

4. The electronic device (100) as claimed in claim 1, wherein when the word note is recorded at a note field corresponding to the selected word in the word table (UWT), the word information comprises the word note (323).

5. The electronic device (100) as claimed in claim 1, wherein when the selected word (PW) is not recorded in the word table (UWT), the word information processing unit (130) records the selected word (PW) in the word table (UWT) through an input signal.

6. The electronic device (100) as claimed in claim 5, wherein the input signal is to mark a translation field corresponding to the selected word (PW), or the input signal is to record the word note (323) at a note field corresponding to the selected word (PW).

7. The electronic device (100) as claimed in claim 1, wherein when the selected word (PW) is recorded in the word table (UWT), the word information processing unit (130) changes the word information corresponding to an input signal.

8. The electronic device (100) as claimed in claim 7, wherein when a translation field corresponding to the selected word (PW) is not marked and the input signal is to mark the translation field, the word information comprises the word translation (WT); when the translation field is marked and the input signal is to delete the mark of the translation field, the word information does not comprise the word translation (WT), or wherein when a note field corresponding to the selected word (PW) is empty and the input signal is to record the word note at the note field, the word information comprises the word note (323); when the word note (323) is recorded at the note field and the input signal is to delete the word note (323), the word information does not comprise the word note (323), or wherein when the word information is empty, the word information processing unit deletes the selected word from the word table (UWT).

9. A display method for word information of an electronic device (100), comprising:
identifying a user to acquire a user characteristic;
acquiring a user word table (UWT) according to the user characteristic;
detecting a selected word (PW) pointed by a pointing device; and
when the selected word (PW) is recorded in the user word table (UWT), displaying the word information corresponding to the selected word (PW) according to the user word table (UWT), wherein the word information comprises at least one of word translation (WT) and a word note (323) corresponding to the selected word (PW).

10. The display method for the word information of the electronic device (100) as claimed in claim 9, wherein the step of displaying the word information corresponding to the selected word (PW) according to the user word table (UWT) comprises:
when a translation field in the user word table (UWT) corresponding to the selected word (PW) is marked, the word information comprises the word translation (WT).

11. The display method for the word information of the electronic device (100) as claimed in claim 10, wherein the word translation (WT) is acquired through a translation interface, wherein the translation interface is provided by at least one of translation software and translation websites.

12. The display method for the word information of the electronic device (100) as claimed in claim 9, wherein the step of displaying the word information corresponding to the selected word (PW) according to the user word table (UWT) comprises:
when the word note (323) is recorded at a note field corresponding to the selected word (PW) in the user word table (UWT), the word information comprises the word note (323).

13. The display method for the word information of the electronic device (100) as claimed in claim 9, further comprising:
when the selected word (PW) is not recorded in the user word table (UWT), the selected word is recorded in the user word table (UWT) through an input by a user.

14. The display method for the word information of the electronic device as claimed in claim 13, wherein the input by the user is to mark a translation field corresponding to the selected word (PW), or the input by the user is to record the word note (323) at a note field corresponding to the selected word (PW).

15. The display method for the word information of the electronic device (100) as claimed in claim 9, further comprising:
when the selected word is recorded in the user word table (UWT), changing the word information corresponding to an input signal.

16. The display method for the word information of the electronic device (100) as claimed in claim 15, wherein the step of changing the word information corresponding to the input signal comprises:
when a translation field corresponding to the selected word (PW) is not marked and the input signal makes to mark the translation field, the word information comprises the word translation (WT); and
when the translation field is marked and the input by the user is to delete the mark of the translation field, the word information does not comprise the word translation (WT).

17. The display method for the word information of the electronic device (100) as claimed in claim 15, wherein the step of changing the word information corresponding to the input signal comprises:
when a note field corresponding to the selected word is empty and the input signal makes to record the word note (323) at the note field, the word information comprises the word note (323); and
when the word note (323) is recorded at the note field and the input by the user is to delete the word note (323), the word information does not comprise the word note (323).

18. The display method for the word information of the electronic device (100) as claimed in claim 15, further comprising:
when the word information is empty, deleting the selected word from the user word table (UWT).
